(19) Europäisches Patentamt / European Patent Office / Office européen des brevets

(11) **EP 4 400 213 A1**

(12) **EUROPEAN PATENT APPLICATION**
published in accordance with Art. 153(4) EPC

(43) Date of publication:
**17.07.2024   Bulletin 2024/29**

(21) Application number: **22867086.5**

(22) Date of filing: **19.07.2022**

(51) International Patent Classification (IPC):
**B02C 4/08** (2006.01)      **B02C 4/30** (2006.01)
**B26F 1/20** (2006.01)      **B29C 59/04** (2006.01)

(52) Cooperative Patent Classification (CPC):
**B02C 4/08; B02C 4/30; B26F 1/20; B29C 59/04**

(86) International application number:
**PCT/JP2022/027992**

(87) International publication number:
**WO 2023/037764 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **07.09.2021   JP 2021145247**

(71) Applicant: **Zeon Corporation
Tokyo 100-8246 (JP)**

(72) Inventor: **HARAI, Kenichi
Tokyo 100-8246 (JP)**

(74) Representative: **Maiwald GmbH
Elisenhof
Elisenstraße 3
80335 München (DE)**

(54)   **ROLL AND METHOD FOR MANUFACTURING POWDER**

(57)   A roll for forming cracks on a thin film, which is disposed on an outermost side, of a multilayer film that includes a substrate layer and the thin film by pressing the roll against a thin film-side surface of the multilayer film, the roll including protrusions on a peripheral surface thereof, the protrusions having a height of 1.1T $\mu$m or more and 1.5T $\mu$m or less where T represents a thickness ($\mu$m) of the thin film.

## FIG.6

EP 4 400 213 A1

**Description**

Field

The present invention relates to a roll and a method for producing a powder.

Background

As a pigment for ink, powders consisting of thin film pieces formed of a thin film of metal, resin, or the like may be used.

As a method for producing thin film pieces of a resin, there is known a method which includes forming a releasing layer on a substrate film, forming a resin thin film on the releasing layer, forming cracks on the resin thin film, and folding the substrate film at an acute angle so that the resin thin film chips off as thin film pieces (see Patent Literature 1).

There is also known another method which includes forming a resin thin film on a substrate film, pressing a member having a recess-protrusion shape against the resin thin film to form cracks on the resin thin film, and blowing a fluid to the cracked resin thin film to exfoliate the resin thin film (see Patent Literature 2).

Citation List

Patent Literature

Patent Literature 1: Japanese Examined Patent Publication No. Hei. 07-080248 B
Patent Literature 2: International Publication No. 2019/189246 (Corresponding Foreign Publication: US Patent Application Publication No. 2021/0115336)

Summary

Technical Problem

If a member having a recess-protrusion shape is pressed against the thin film on the substrate film to form cracks on the thin film as the technique of Patent Literature 2, thin film pieces may adhere to the surface of the member having the recess-protrusion shape when the member having the recess-protrusion shape is released from the thin film. When the member having the recess-protrusion shape is continuously used, such adhesion of the thin film pieces to the surface of the member having the recess-protrusion shape may cause deterioration in precision of crack formation and may also cause necessity of frequent cleaning of the member. Consequently, the productivity may be reduced.

Use of a roll as the member having the recess-protrusion shape is advantageous in terms of enabling continuous crack formation on the thin film. However, such an advantage is lost if thin film pieces adhere to the roll and frequent cleaning is needed as described above.

Thus, there is a demand for a roll to which small pieces of a thin film are less likely to adhere when the roll is released from the thin film after the formation of cracks on the thin film by pressure, and a method for producing a powder by which a powder containing small pieces of a thin film is obtained using such a roll. Solution to Problem

To solve the foregoing problem, the inventor has made an intensive study and found that the adhesion of small pieces of a thin film to a roll is related to the height of protrusions on the roll.

Without limiting the present invention, the present inventor inferred that the reason why the adhesion of small pieces of the thin film to the roll is related to the height of the protrusions of the roll is as follows:

If the height of the protrusions of the roll is too large compared to the thickness of the thin film to be cracked, the portions between the protrusions of the thin film experience an increased degree of deformation and compression when the roll presses the thin film, and the small pieces of the thin film are trapped between the protrusions and become harder to detach. It is considered that, as a result, the adhesion of small pieces of the thin film to the roll increase. On the other hand, if the height of the protrusions of the roll is the same as the thickness of the thin film to be cracked, it is considered that difficulty in stably forming cracks on the thin film increases.

From the foregoing finding, the inventor has found that the adhesion of small pieces of the thin film to the roll can be reduced by confining the height of the protrusions of the roll within a specific range, and completed the present invention.

Specifically, the present invention provides the following.

<1> A roll for forming cracks on a thin film, which is disposed on an outermost side, of a multilayer film that includes a substrate layer and the thin film by pressing the roll against a thin film-side surface of the multilayer film, the roll comprising protrusions on a peripheral surface thereof, the protrusions having a height of 1.1T μm or more and 1.5T μm or less where T represents a thickness (μm) of the thin film.

<2> A method for producing a powder, comprising:

a step (1) of forming cracks on a multilayer film that includes a substrate layer and a thin film which is disposed on an outermost side of the multilayer film, the cracks dividing the thin film into small pieces of the same shape when viewed in a thickness direction thereof and reaching a position deeper than a thin film-side surface of the substrate layer; and

a step (2) of exfoliating the small pieces of the thin film from the substrate layer of the multilayer film on which the cracks is formed to obtain a powder containing the small pieces of the thin film, wherein

the step (1) includes a step (1a) of pressing a peripheral surface of the roll against the thin film-side surface of the multilayer film, and

the roll has protrusions on the peripheral surface thereof, the protrusions having a height of 1.1T μm or more and 1.5T μm or less where T represents a thickness (μm) of the thin film.

<3> The method for producing a powder according to <2>, wherein a peripheral surface between the protrusions of the roll is flat.

<4> The method for producing a powder according to <2> or <3>, wherein the thickness T of the thin film is 0.1 μm or more and 20 μm or less.

<5> The method for producing a powder according to any one of <2> to <4>, wherein in the step (1a) a pressure for pressing the peripheral surface of the roll is 0.5 MPa or more.

<6> The method for producing a powder according to any one of <2> to <5>, wherein pressing of the step (1a) is performed in a state where the multilayer film is supported by a support member having a surface hardness of D40 or more.

<7> The method for producing a powder according to any one of <2> to <6>, wherein a major diameter of the small pieces is 150 μm or less.

Advantageous Effects of Invention

According to the present invention, it is possible to provide a roll to which small pieces of a thin film are less likely to adhere when the roll is released from the thin film after the formation of cracks on the thin film by pressure, and a method for producing a powder by which a powder containing small pieces of a thin film is obtained using such a roll.

Brief Description of Drawings

FIG. 1 is a cross-sectional view illustrating an example of a multilayer film used in a step (1) according to an embodiment.

FIG. 2 is a schematic plan view of the thin film-side surface of a multilayer film on which cracks are formed according to the embodiment, when viewed in a thickness direction of the multilayer film.

FIG. 3 is a cross-sectional view schematically illustrating a cross-section of FIG. 2 taken along line III-III.

FIG. 4 is a schematic plan view of the thin film-side surface of a multilayer film on which cracks are formed according to an embodiment, when viewed in the thickness direction of the multilayer film.

FIG. 5 is a cross-sectional view schematically illustrating a cross-section of FIG. 4 taken along line V-V.

FIG. 6 is a perspective view schematically illustrating an example of a roll that may be used in a method for producing a powder according to an embodiment.

FIG. 7 is a perspective view schematically illustrating the roll illustrated in FIG. 6.

FIG. 8 is a plan view schematically illustrating a state where the roll of FIG. 7 is cut along line X1-X1 and developed.

FIG. 9 is a partial cross-sectional view taken along line Y1-Y1 of FIG. 8.

FIG. 10 is a perspective view schematically illustrating an example of the roll that may be used in the method for producing a powder according to an embodiment.

FIG. 11 is a perspective view schematically illustrating the roll illustrated in FIG. 10.

FIG. 12 is a plan view schematically illustrating a state where the roll of FIG. 11 is cut along line X2-X2 and developed.

FIG. 13 is a partial cross-sectional view taken along line Y2-Y2 of FIG. 12.

Description of Embodiments

Hereinafter, the present invention will be described in detail with reference to embodiments and examples. However, the present invention is not limited to the following embodiments and examples, and may be freely modified for implementation without departing from the scope of claims of the present invention and the scope of their equivalents. The components of the embodiments described below may be appropriately combined. In the drawings, the same components are denoted by the same reference numerals, and descriptions thereof may be omitted.

In the following description, a "long-length" film refers to a film with the length that is 5 times or more the width of the film, and preferably a film with the length that is 10 times or more the width thereof, and specifically refers to a film having a length that allows a film to be wound up into a rolled shape for storage or transportation. The upper limit of the length of the film is not particularly limited, and may be a length that is, for example, 100,000 times or less the width.

In the following description, the term "(meth)acryl" encompasses "acryl", "methacryl", and a combination thereof.

In the following description, the direction of an element being "parallel" or "perpendicular" may include an error within a range that does not impair the advantageous effects of the present invention, for example, within a range of ±3°, ±2°, or ±1°, unless otherwise specified.

[1. Overview of method for producing powder using roll]

The roll according to an embodiment of the present invention is used for forming cracks on a thin film of a multilayer film that includes a substrate layer and the thin film that is disposed on the outermost side thereof, by pressing the roll against the thin film-side surface of the multilayer film.

The roll according to the present embodiment may be used in a method for producing a powder, the method including the following steps (1) and (2). More specifically, the roll may be used in a step (1a) included in the following step (1).

In the step (1), cracks are formed on the multilayer film that includes the substrate layer and the thin film that is disposed on the outermost side. These cracks divide the thin film into small pieces of the same shape when viewed in a thickness direction thereof and reach a position deeper than a thin film-side surface of the substrate layer.

In the step (1a) included in the step (1), a peripheral surface of the roll is pressed against the thin film-side surface of the multilayer film. The roll has protrusions on the peripheral surface. The protrusions have a height of 1.1T μm or more and 1.5T μm or less. T herein represents the thickness (μm) of the thin film.

In the step (2), the small pieces of the thin film are exfoliated from the substrate layer of the multilayer film on which the cracks has been formed, to obtain a powder that contains the small pieces of the thin film.

In the method for producing a powder, adhesion to the roll of small pieces of the thin film may be reduced by employing the specific roll. Consequently, frequency of cleaning the roll can be reduced and thereby productivity of the powder can be improved.

[2. Step (1)]

In the step (1), cracks are formed on the multilayer film, which includes the substrate layer and the thin film that is disposed on the outermost side. These cracks divide the thin film into small pieces of the same shape when viewed in the thickness direction thereof and reach a position deeper than the thin film-side surface of the substrate layer.

[2.1. Multilayer film]

The multilayer film used in the step (1) includes the substrate layer and the thin film. The thin film is disposed on the outermost side of the multilayer film. The phrase "disposed on the outermost side" herein means that the thin film is disposed on the outermost side in the thickness direction of the multilayer film. Therefore, the surface of the thin film is exposed on one surface of the multilayer film. The multilayer film may include any optional layer between the thin film and the substrate layer.

The multilayer film is preferably a long-length film for efficiently forming cracks.

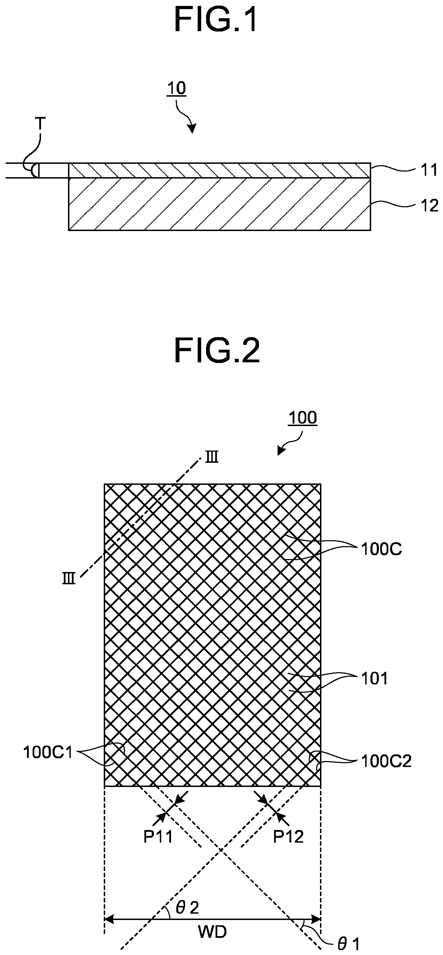

FIG. 1 is a cross-sectional view illustrating an example of a multilayer film used in the step (1) according to an embodiment. As illustrated in FIG. 1, the multilayer film 10 includes a substrate layer 12 and a thin film 11 placed directly on the substrate layer 12. The thin film has a thickness T.

(Substrate layer)

The substrate layer is preferably a long-length layer for efficiently forming the thin film.

Examples of the material for forming the substrate layer may include, but are not particularly limited to, a resin containing a polymer, paper, and a metal. A resin containing a polymer is preferable because of its excellent flexibility and mechanical strength.

Examples of the polymer contained in the resin that may form the substrate layer may include a cellulose-based polymer (for example, triacetyl cellulose); a polymer containing an alicyclic structure (for example, a cycloolefin polymer); a polyester (for example, a polyethylene terephthalate); an acrylic polymer (for example, a poly(meth)acrylic acid, a poly(meth)acrylic acid ester, and a polyacrylonitrile); and a polycarbonate. The resin that may form the substrate layer may contain solely one type of polymer or a combination of two or more types of polymers. The polymer may be a homopolymer or a copolymer. In addition to the polymer, the resin may contain an optional additive(s).

Examples of the polymer containing an alicyclic structure may include (1) a norbornene-based polymer, (2) a monocyclic olefin polymer, (3) a cyclic conjugated diene polymer, and (4) a vinyl alicyclic hydrocarbon polymer, and hydrogenated products thereof. Among them, a norbornene-based polymer and a hydrogenated product thereof are preferable from the viewpoint of transparency and moldability.

Examples of the norbornene-based polymer may include a ring-opening polymer of a monomer having a norbornene structure and a hydrogenated product thereof; and an addition polymer of a monomer having a norbornene structure and a hydrogenated product thereof. Examples of the ring-opening polymer of a monomer having a norbornene structure may include a ring-opening homopolymer of one type of monomer having a norbornene structure, a ring-opening copolymer of two or more types of monomers having a norbornene structure, and a ring-opening copolymer of a monomer having a norbornene structure and an optional monomer copolymerizable therewith. Furthermore, examples of the addition polymer of a monomer having a norbornene structure may include an addition homopolymer of one type of monomer having a norbornene structure, an addition copolymer of two or more types of monomers having a norbornene structure, and an addition copolymer of a monomer having a norbornene structure and an optional monomer copolymerizable therewith. Examples of these polymers may include polymers disclosed in, e.g., Japanese Patent Application Laid-Open No. 2002-321302 A.

Preferable specific examples of the norbornene-based polymer and the hydrogenated product thereof may include "ZEONOR" manufactured by ZEON Corporation, "ARTON" manufactured by JSR Corporation; "TOPAS" manufactured by TOPAS ADVANCED POLYMERS Co., Ltd.

The thickness of the substrate layer is preferably 12 μm or more, more preferably 25 μm or more, and still more preferably 50 μm or more, and is preferably 250 μm or less, more preferably 200 μm or less, and still more preferably 188 μm or less. When the thickness of the substrate layer is equal to or more than the above-mentioned lower limit value, a mechanical strength of the substrate layer can be improved. When the thickness of the substrate layer is equal to or less than the above-mentioned upper limit value, flexibility of the substrate layer can be improved, and handling at the time of manufacturing can be facilitated.

The substrate layer may have a single-layer structure or a multilayer structure.

When the substrate layer has a multilayer structure, it is preferable that each layer included in the substrate layer has a peel strength that does not cause exfoliation from each other in the step (1) and the step (2) .

The substrate layer preferably has a single-layer structure.

The surface of the substrate layer may be subjected to a rubbing treatment, a corona treatment, or the like.

The substrate layer may be an unstretched layer that has not been subjected to stretching, or a stretched layer.

The multilayer film may be a film consisting only of the substrate layer and the thin film, and may include an optional layer(s) in addition to the substrate layer and the thin film. For example, when a liquid crystal composition is used as a composition for forming the thin film, the multilayer film may have an orientation film between the substrate layer and the thin film from the viewpoint of causing favorable orientation of the liquid crystal composition. The orientation film may be formed of, for example, a resin containing a polymer such as a polyimide, a polyvinyl alcohol, a polyester, a polyarylate, a polyamideimide, a polyetherimide, or a polyamide. As these polymers, one type thereof may be solely used, and two or more types thereof may also be used in combination at any ratio. The orientation film may be produced by applying a solution containing the above-described polymer, drying it, and subjecting it to a rubbing treatment.

(Thin film)

The thin film may have any structure of a single-layer structure or a multilayer structure. The thin film may be either a conductor or a dielectric substance. Furthermore, the thin film may be either an inorganic film or an organic film. Examples of the thin film may include a film of a metal such as aluminum or silver; a dielectric multilayer film formed of a dielectric substance such as titanium oxide, silicon oxide, niobium oxide, tantalum oxide, and magnesium fluoride; and a resin film.

Examples of resin materials for forming a resin film may include a photocurable liquid crystal composition, an acrylic resin, a polystyrene, a polyester, a polyamide, a polyvinyl chloride, a polyvinyl acetate, a cellulose-based polymer (for example, triacetylcellulose), a polycarbonate, a polyurethane, a polyolefin, an alicyclic structure-containing polymer, an epoxy resin, a melamine resin, a phenolic resin, and combinations thereof. The polymer that may be included in the resin material may be a homopolymer or a copolymer. In addition to the polymer, the resin material may contain optional additives such as a curing agent, an antioxidant, and the like.

The thickness T of the thin film may be appropriately set according to the material of the thin film, the purpose of use of the powder, and the like. The thickness T is preferably 0.1 $\mu$m or more, more preferably 0.5 $\mu$m or more, and still more preferably 1 $\mu$m or more, and is preferably 20 $\mu$m or less, more preferably 15 $\mu$m or less, and still more preferably 10 $\mu$m or less, from the viewpoint of ensuring the reflectance of the thin film. By setting the thickness of the thin film to be equal to or less than the above-described upper limit value, the obtained powder can be suitably used for ink adaptable to printing layers with various thicknesses.

When the thickness T of the thin film is small, adhesion of small pieces of the thin film to the roll are likely to occur. However, even when the thickness T of the thin film is small (for example, when the thickness T of the thin film is preferably 20 $\mu$m or less, more preferably 15 $\mu$m or less, and still more preferably 10 $\mu$m or less), the use of the roll according to the present embodiment can reduce adhesion of small pieces of the thin film to the roll.

As the thin film, for example, a film made of a cured product obtained by curing a photocurable liquid crystal composition used as a composition containing a resin may be used. That is, as the resin for forming the thin film, for example, a cured product of a photocurable liquid crystal composition may be used. For the sake of convenience, a material referred to herein as a "liquid crystal composition" encompasses not only a mixture of two or more substances, but also a material consisting of a single substance.

As the thin film, for example, a cholesteric resin layer may be used. The cholesteric resin layer refers to a resin layer having cholesteric regularity. The cholesteric regularity that the resin layer having cholesteric regularity has is a structure in which the angle of molecular axes in stacking planes are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules in the layer have cholesteric regularity, the molecules are aligned in a manner such that multiple molecular layers are formed in the resin layer. In a certain layer A among such multiple molecular layers, molecules are aligned in such a manner that axes of the molecules are directed in a certain direction. In the neighboring layer B, molecules are aligned in a direction that is shifted to form an angle with the direction in the layer A. In the further neighboring layer C, molecules are aligned in a direction that is further shifted to form an angle with the direction in the layer B. In this manner, in the multiple molecular layers, the angles of the axes of the molecules are continuously shifted to form a structure in which molecules are twisted. Such a structure wherein the directions of the molecular axes are sequentially twisted constitutes an optically chiral structure.

The cholesteric resin layer usually has a circularly polarized light separation function. That is, the cholesteric resin layer has a property of transmitting one circularly polarized light out of the right circularly polarized light and the left circularly polarized light and reflecting part or all of the other circularly polarized light. By the reflection in the cholesteric resin layer, circularly polarized light is reflected while its chirality is maintained.

In the case where the cholesteric resin layer as described above is used as the thin film, the production method of the present embodiment can produce a powder composed of small pieces of a resin film utilizing a circularly polarized light separation function, the powder having a large proportion of thin film pieces having a consistent shape.

The thin film may be formed by any optional method depending on the material of the thin film or the like. For example, the thin film may be formed by a vapor deposition method, a sputtering method, a coating method, or the like. Examples of the coating method may include a die coating method, a curtain coating method, an extrusion coating method, a roll coating method, a spin coating method, a dip coating method, a bar coating method, a spray coating method, a slide coating method, a printing coating method, a gravure coating method, and a gap coating method.

[2.2. Crack formation]

(Cracks)

The cracks formed in the step (1) divide the thin film included in the multilayer film into small pieces of the same shape when viewed in the thickness direction thereof. The cracks are formed to reach a position deeper than the thin film-side surface of the substrate layer. The cracks are formed to reach the position deeper than the thin film-side surface of the substrate layer over the entire area of the multilayer film.

The shape of the small pieces viewed in the thickness direction of the thin film is not particularly limited. Examples thereof may include a polygonal shape such as a triangle, a quadrangle, and a hexagon, a cross shape, and a circle. A triangle, quadrangle, or hexagon is preferable.

From the viewpoint of reducing clogging of ink on a printing plate, the major diameter of the small pieces viewed in the thickness direction of the thin film is preferably 250 $\mu$m or less, more preferably 200 $\mu$m or less, still more preferably 175 $\mu$m or less, and still further preferably 150 $\mu$m or less. From the viewpoint of improving the visibility of the print layer formed with the ink, the major diameter is usually more than 0 μm, and preferably 10 μm or more. The major diameter herein refers to the longest one among plurality of distances each of which is between a pair of parallel lines drawn to touch the contour of a small piece.

Examples of the cracks formed in the step (1) will now be described.

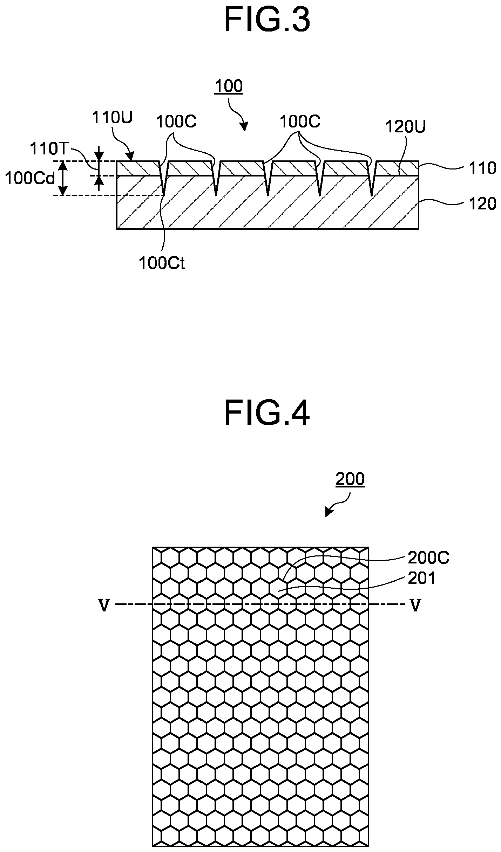

FIG. 2 is a schematic plan view of the thin film-side surface of the multilayer film on which cracks are formed according to the embodiment, when viewed in the thickness direction of the multilayer film. FIG. 3 is a cross-sectional view schematically illustrating a cross-section of FIG. 2 taken along line III-III.

As illustrated in FIG. 2, grid-shape cracks 100C are formed on a multilayer film 100. The cracks 100C include a plurality of linear notches 100C1 extending diagonally, downward to the right, at an angle of θ1 with respect to a width direction WD of the multilayer film 100, and a plurality of linear notches 100C2 extending diagonally, upward to the right, at an angle of θ2. Defining that a clockwise angle with respect to the width direction WD of the multilayer film 100 in FIG. 2 is positive and a counterclockwise angle negative, θ1 is 45° and θ2 is -45°.

In the present embodiment, a pitch P11 between adjoining notches 100C1 is substantially the same as a pitch P12 between adjoining notches 100C2. Being substantially the same herein means that P12 is 90% or more and 110% or less of P11. The grid-shape cracks 100C including such a plurality of notches 100C1 and a plurality of notches 100C2 divide the thin film, which is disposed on the outermost side of the multilayer film 100, into a plurality of small pieces 101 that are substantially square shaped. The plurality of small pieces 101 have edges having lengths corresponding to the pitches P11 and P12. In the present embodiment, the plurality of small pieces 101 have an edge length of P11.

As illustrated in FIG. 3, the multilayer film 100 includes a substrate layer 120 and a thin film 110 directly formed on the substrate layer 120. A depth 100Cd of the cracks 100C refers to the distance from a surface 110U that is on the thin film 110 side of the multilayer film 100 to a tip 100Ct of the cracks 100C. The depth 100Cd of the cracks 100C is greater than a thickness 110T of the thin film 110. The tips 100Ct of the cracks 100C thus reach a position deeper than a surface 120U of the substrate layer 120 that is on the thin film 110 side.

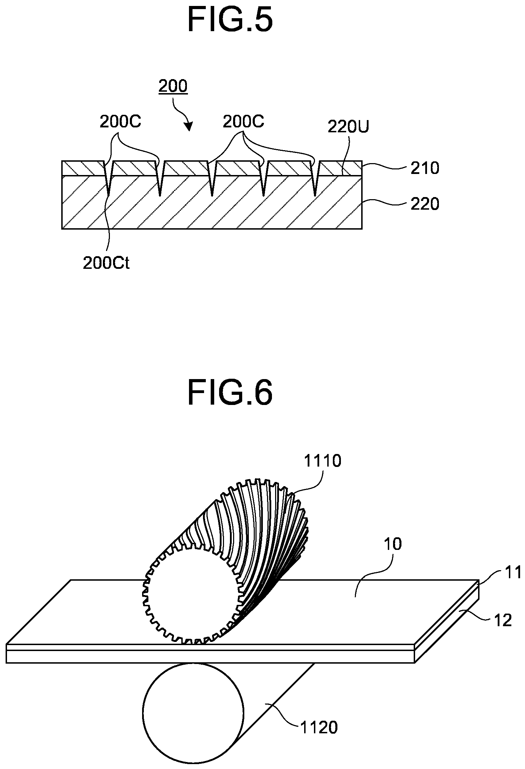

FIG. 4 is a schematic plan view of the thin film-side surface of a multilayer film on which cracks are formed according to another embodiment, when viewed in the thickness direction of the multilayer film. FIG. 5 is a cross-sectional view schematically illustrating a cross-section of FIG. 4 taken along line V-V.

As illustrated in FIG. 4, honeycomb-shape cracks 200C are formed on a multilayer film 200. The honeycomb-shape cracks 200C divide the thin film, which is disposed on the outermost side of the multilayer film 200, into a plurality of small pieces 201 that are substantially regular hexagonal shaped.

As illustrated in FIG. 5, the multilayer film 200 includes a substrate layer 220 and a thin film 210 directly formed on the substrate layer 220. Again, in the present embodiment, tips 200Ct of the cracks 200C reach a position deeper than a surface 220U of the substrate layer 220 on the thin film 210 side.

In yet another embodiment, cracks of continuous triangular shape as viewed in the thickness direction of the multilayer film may be formed on the multilayer film.

(Step (1a))

In the step (1a), the peripheral surface of a roll is pressed against the thin film-side surface of the multilayer film. Cracks can thereby be formed on the thin film included in the multilayer film.

The roll has protrusions on its peripheral surface. The protrusions usually have a height of 1.1T μm or more, preferably 1.15T μm or more, and more preferably 1.20T μm or more, and is usually 1.5T μm or less, preferably 1.45T μm or less, and more preferably 1.40T μm or less. T herein represents the thickness (μm) of the thin film. In another embodiment of the roll, the height of the protrusions is preferably 1.1 μm or more, more preferably 1.5 μm or more, more preferably 1.6 μm or more, more preferably 2.0 μm or more, and more preferably 3.0 μm or more, and is preferably 21.5 μm or less, more preferably 21.0 μm or less, more preferably 16.5 μm or less, more preferably 16.0 μm or less, more preferably 15.0 μm or less, more preferably 11.5 μm or less, more preferably 11.0 μm or less, and more preferably 10.0 μm or less.

The height of the protrusions of the roll refers to the height of the protrusions relative to a deepest position on the peripheral surface of the roll (position closest to the roll axis).

In the step (1a), a roll having, on its peripheral surface, protrusions corresponding to the shape of the cracks viewed in the thickness direction of the multilayer film may be used. For example, when the shape of the cracks viewed in the thickness direction of the multilayer film is grid-shape, a roll having grid-shape protrusions on its peripheral surface may be used. When the shape of the cracks viewed in the thickness direction of the multilayer film is honeycomb-shape, a roll having honeycomb-shape protrusions on its peripheral surface may be used.

The step (1a) may be repeated a plurality of times. For example, a first-time step (1a) using a roll having, on its peripheral surface, protrusions corresponding to a portion of the cracks, and a second-time step (1a) using a roll having, on its peripheral surface, protrusions corresponding to another portion of the cracks may be performed. For example, when the cracks are grid-shape and divide the thin film into squares when viewed in the thickness direction thereof, the cracks may be formed by pressing, against the multilayer film, a first roll having, on its peripheral surface, protrusions corresponding to crack-constituting notches in one direction and a second roll having, on its peripheral surface, protrusions corresponding to crack-constituting notches in another direction.

As the material of the roll, a material having a strength with which breakage upon pressing the multilayer film can be avoided and being capable of forming a recess-protrusion structure may be employed. Examples of such a material may include carbon steel and stainless steel. The roll may have one layer of coating or two or more layers of multilayer coating on the surface for the purpose of improving corrosion resistance, strength, thermal conductivity, etc. Examples of such coatings may include, but are not particularly limited to, plated coatings of nickel, nickel phosphorous, silicon, and copper, and coatings formed by ceramic spraying. The roll may be equipped with heating means such as a heater, a heat carrier, and means using dielectric heating and induction heating, and/or a destaticizing device, a grounding wire, or the like as antistatic measures.

The roll may be produced by any publicly known method in the art. For example, a roll having a desired recess-protrusion shape may be formed by cutting a member such as a cylindrical metal roll using a cutting tool such as a diamond cutting tool, or by machining the member using a laser machining apparatus.

The pressure for pressing the roll against the thin-film side of the multilayer film is preferably 0.5 MPa or more, more preferably 1 MPa or more, and still more preferably 5 MPa or more, and is preferably 100 MPa or less, and more preferably 75 MPa or less. By setting the pressure at or above the lower limit value, cracks with a sufficient depth in the multilayer film can be formed. By setting the pressure at or below the upper limit value, breakage of the multilayer film can be prevented. When a roll or a plurality of rolls, having one or more types of recess-protrusion shapes is pressed against the multilayer film multiple times to form cracks on the multilayer film, the multiple pressing procedures may be the same or different. The multiple pressing procedures are preferably performed at the same pressure.

It is preferable that, upon the pressing of the roll having the protrusions against the multilayer film, the multilayer film is supported by a support member and sandwiched between the support member and a roll having protrusions.

Usually, the support member has a support surface that supports a surface of the multilayer film opposite to the side facing the thin film. The support surface for supporting the surface of the multilayer film preferably has a hardness of D40 or more, more preferably D60 or more, and still more preferably D70 or more, and is preferably D99 or less, more preferably D97 or less, and still more preferably D95 or less. The hardness herein refers to a value measured using a durometer (type D) according to JIS K-6253. With the hardness of the support surface of the support member in the foregoing range, cracks of appropriate depth can be easily formed on the multilayer film. As the support member, a material having a strength with which breakage upon pressing the multilayer film with the roll can be avoided may be employed. Examples of the material of the surface of the support member may include rubber and a resin.

The support member may have any given shape (for example, a roll shape or a flat plate shape) for adapting to, e.g., the method for conveying the multilayer film and the method for pressing a member having a recess-protrusion shape against the multilayer film. It is preferable that the support member in in a roll shape since therewith continuous formation of cracks on a long-length multilayer film can be performed.

Examples of the roll having the protrusions and the step (1) using the roll will now be described.

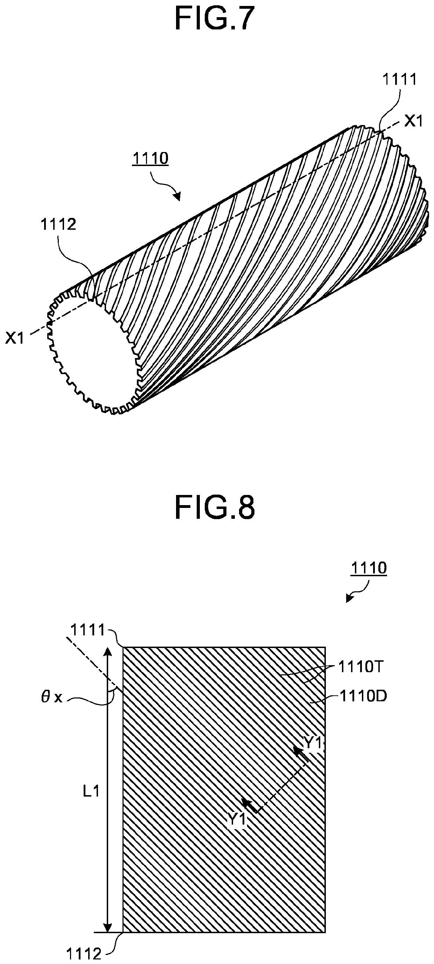

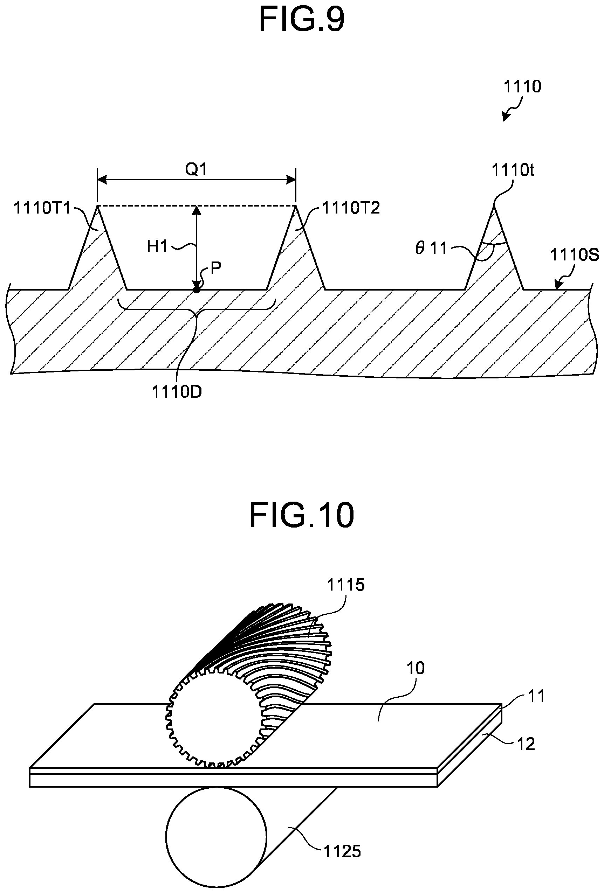

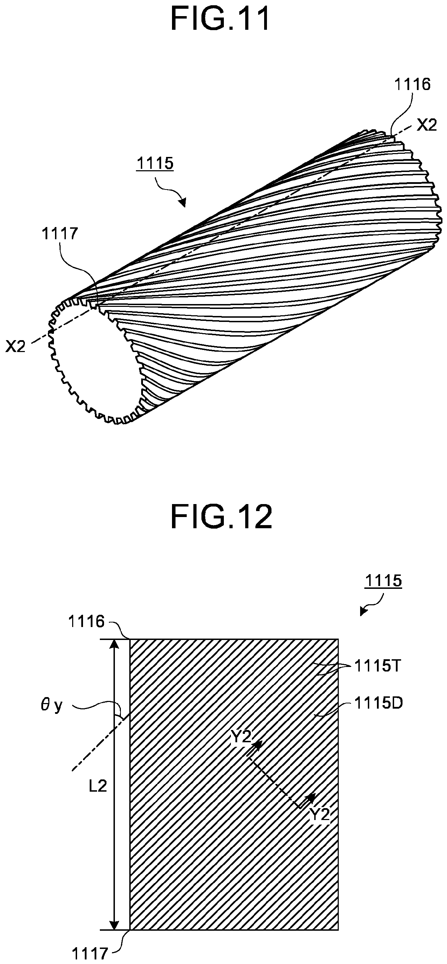

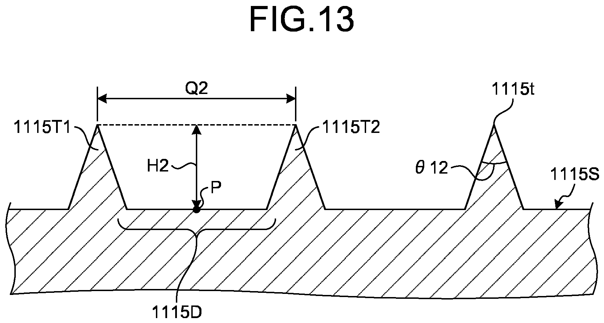

FIG. 6 is a perspective view schematically illustrating an example of a roll that may be used in the method for producing a powder according to the present embodiment. FIG. 7 is a perspective view schematically illustrating the roll illustrated in FIG. 6. FIG. 8 is a plan view schematically illustrating a state where the member of FIG. 7 is cut along line X1-X1 and developed. FIG. 9 is a partial cross-sectional view taken along line Y1-Y1 of FIG. 8. FIG. 10 is a perspective view schematically illustrating an example of a roll that may be used in the method for producing a powder according to the present embodiment. FIG. 11 is a perspective view schematically illustrating the roll illustrated in FIG. 10. FIG. 12 is a plan view schematically illustrating a state where the member of FIG. 11 is cut along line X2-X2 and developed. FIG. 13 is a partial cross-sectional view taken along line Y2-Y2 of FIG. 12.

As illustrated in FIG. 6, a roll 1110 is located to be in contact with the surface of the multilayer film 10 on the thin film 11 side and presses the multilayer film 10. As illustrated in FIG. 10, a roll 1115 is located to be in contact with the surface of the multilayer film 10 on the thin film 11 side and presses the multilayer film 10. There is no particular limitation regarding the order of the pressing of the multilayer film 10 by the roll 1110 and the pressing of the multilayer film 10 by the roll 1115. For example, the multilayer film 10 may be pressed by the roll 1110 and then pressed by the roll 1115. Alternatively, the multilayer film 10 may be pressed by the roll 1115 and then pressed by the roll 1110.

As illustrated in FIG. 6, the peripheral surface (surface to be in contact with the multilayer film 10) of the roll 1110 has protrusions. As illustrated in FIG. 10, the peripheral surface of the roll 1115 also has protrusions. As illustrated in FIGs. 6 and 10, the rolls 1110 and 1115 have a cylindrical shape and can rotate to move over the multilayer film 10.

A support member 1120 located at the surface of the multilayer film 10 on the substrate layer 12 side is a member for sandwiching and pressing the multilayer film 10 with the roll 1110.

A support member 1125 located at the surface of the multilayer film 10 on the substrate layer 12 side is a member for sandwiching and pressing the multilayer film 10 with the roll 1115. The support member 1120 and the support member 1125 each have a cylindrical shape and can rotate to move under the multilayer film 10.

Of the surfaces of the multilayer film 10, the surface to be in contact with the rolls 1110 and 1115 (in the drawings, the upper surface) is where the thin film 11 is formed. When the multilayer film 10 is sandwiched between the roll 1110 and the support member 1120, protrusions 1110T of the roll 1110 come in contact with the thin film 11. By pressing the multilayer film 10 while keeping the state of being sandwiched between the roll 1110 and the support member 1120, the protrusions 1110T of the roll 1110 penetrate into the thin film 11 and the substrate layer 12 to form notches 100C1 that constitute the cracks 100C. Further, when the multilayer film 10 is sandwiched between the roll 1115 and the support member 1125, protrusions 1115T of the roll 1115 come in contact with the thin film 11. By pressing the multilayer film 10 while keeping the state of being sandwiched between the roll 1115 and the support member 1125, the protrusions 1115T of the roll 1115 penetrate into the thin film 11 and the substrate layer 12 to form notches 100C2 that constitute the cracks 100C. Consequently, the multilayer film 10 on which the cracks 100C are formed is obtained (see FIGs. 2 and 3).

Protrusions are formed on the peripheral surface of the roll 1110, and thereby the recess-protrusion shape is formed. As illustrated in FIG. 8, the recess-protrusion shape is such that the protrusions 1110T and recesses 1110D, which extend in a direction tilted by an angle $\theta x$ with respect to a direction denoted by L1, are formed in an alternately repeating manner in a direction perpendicular to the direction of formation of the protrusions 1110T. $\theta x$ is not limited in particular, and may be, e.g., 45°. As illustrated in FIG. 8, the recess-protrusion shape of the roll 1110 includes an array of straight lines extending diagonally, downward to the right, when viewed on the drawing. The distance between two adjoining protrusions 1110T (distance Q1 between a protrusion 1110T1 and a protrusion 1110T2 illustrated in FIG. 9) may be appropriately set. In FIGs. 7 and 8, ends 1111 and 1112 represent the ends of the roll 1110.

As illustrated in FIG. 9, the protrusions 1110T may be formed in a ridge shape with apexes 1110t that are acute-angled when viewed in a cross section. In FIG. 9, $\theta 11$ is the angle of the apexes of the protrusions. $\theta 11$ is preferably small, and may be, e.g., 10° or more, 20° or more, or 30° or more, and may be, e.g., 90° or less, 80° or less, 70° or less, or 60° or less. The shape of the apexes of the protrusions 1110T may be a round shape or chamfered shape as long as cracks can be formed on the thin film and the substrate layer.

As illustrated in FIG. 9, a height H1 of the protrusions 1110T1 and 1110T2 refers to the height of the protrusions relative to a deepest position P on a peripheral surface 1110S of the roll 1110 (position closest to the roll axis). The height H1 is usually 1.1T $\mu$m or more and 1.5T $\mu$m or less. T herein represents the thickness ($\mu$m) of the thin film 11.

As illustrated in FIG. 9, the peripheral surface between the adjoining protrusions 1110T1 and 1110T2 is flat. When the roll 1110 is pressed against the surface of the multilayer film 10 on the thin film 11 side, the protrusion 1110T1 and the protrusion 1110T2 are thereby prevented from being pressed into the multilayer film 10 to a depth that is excessively beyond the height of the protrusions 1110T1 and 1110T2. As a result, the adhesion of small pieces of the thin film to the roll 1110 can be further reduced.

The peripheral surface of the roll 1115 has the protrusions, whereby a recess-protrusion shape is formed. As illustrated in FIG. 12, the recess-protrusion shape is such that the protrusions 1115T and recesses 1115D, which extend in a direction tilted by an angle $\theta y$ with respect to a direction denoted by L2, are formed in an alternately repeating manner, in a direction perpendicular to the direction of formation of the protrusions 1115T. $\theta y$ is not limited in particular, and may be, e.g., 45°. As illustrated in FIG. 12, the recess-protrusion shape of the roll 1115 includes an array of straight lines extending diagonally, upward to the right, when viewed on the drawing. A distance between two adjoining protrusions 1115T (distance Q2 between a protrusion 1115T1 and a protrusion 1115T2 illustrated in FIG. 13) may be appropriately set. In FIGs. 11 and 12, ends 1116 and 1117 represent the ends of the roll 1115.

As illustrated in FIG. 13, the protrusions 1115T may be formed in a ridge shape with apexes 1115t that are acute-angled when viewed in a cross section. In FIG. 13, $\theta 12$ is the angle of the apexes of the protrusions. $\theta 12$ is preferably small, and may be, e.g., 10° or more, 20° or more, or 30° or more, and may be, e.g., 90° or less, 80° or less, 70° or less, or 60° or less. The shape of the apexes of the protrusions 1115T may be a round shape or chamfered shape as long as cracks can be formed on the thin film and the substrate layer.

As illustrated in FIG. 13, a height H2 of the protrusions 1115T1 and 1115T2 refers to the height of the protrusions relative to a deepest position P on a peripheral surface 1115S of the roll 1115 (position closest to the roll axis). The height H2 is usually 1.1T $\mu$m or more and 1.5T $\mu$m or less. T herein represents the thickness ($\mu$m) of the thin film 11.

Like the roll 1110, the peripheral surface between the adjoining protrusions 1115T1 and 1115T2 is flat as illustrated in FIG. 13. By the same reason as described for the roll 1110, this flat surface can further reduce the adhesion of small pieces of the thin film to the roll 1115.

By performing the step (1), cracks are formed on the multilayer film (for example, as illustrated in FIGs. 3 and 5, the cracks 100C or the cracks 200C are formed on the multilayer film 10). The cracked multilayer film (for example, multilayer film 100 or 200) is subjected to the step (2).

The shape of the cracks reflects the shape of the protrusions on the roll. For example, when the roll 1110 having the developed shape illustrated in FIG. 8 is pressed while disposed in a manner such that the L1 direction of FIG. 8 is in parallel with a lengthwise direction of the multilayer film, notches can be formed in a direction oblique to the lengthwise direction of the multilayer film 10. When the roll 1115 having the developed shape illustrated in FIG. 12 is then pressed while disposed in a manner such that the L2 direction of FIG. 12 is in parallel with the lengthwise direction of the multilayer film, the grid-shape cracks 100C illustrated in FIG. 2 can be formed. In FIG. 2, the linear notches 100C1 extending diagonally, downward to the right, reflect the shape of the protrusions on the roll 1110. The linear notches 100C2 extending diagonally, upward to the right, reflect the shape of the protrusions on the roll 1115.

As described above, the protrusions on the peripheral surfaces of the rolls 1110 and 1115 used in the producing method according to the present embodiment usually have a height of 1.1T $\mu$m or more and 1.5T $\mu$m or less. This can reduce the adhesion of small pieces of the thin film to the rolls.

When the height of the protrusions of the rolls is too large compared to the thickness of the thin film to be cracked, the degree of deformation and compression of the thin film between the protrusions during the pressing of the rolls increases, and the small pieces of the thin film can be trapped between the protrusions and become harder to detach. As a result, the adhesion of small pieces of the thin film to the rolls can increase. On the other hand, when the height of the protrusions of the rolls is the same as the thickness of the thin film to be cracked, difficulty in stably forming cracks on the thin film can increase.

As described above, the roll 1110 and the roll 1115 have a flat peripheral surface between adjoining protrusions. This flat surface prevents the protrusions from being pressed into the multilayer film to a depth that is excessively beyond the height of the protrusions. As a result, the adhesion of small pieces of the thin film to the rolls can be further reduced.

The rolls used in the producing method according to the present embodiment therefore do not need frequent cleaning and can produce a powder with high productivity.

The degree of adhesion of small pieces of the thin film to a roll may be evaluated, e.g, by either one of the following methods (1) and (2).

Method (1)

Observe the surface of the midsection of the roll under a microscope.

In a 1-mm-square region, measure the area of the thin film present on the peripheral surface (recesses) of the roll except for the protrusions.

Small measured area of the thin film is indicative of low degree of adhesion of small pieces of the thin film to the roll.

Method (2)

Observe the surface of the midsection of the roll under a microscope.

In a 1-mm-square region, count the number of small pieces of the thin film present on the peripheral surface (recesses) of the roll except for the protrusions.

Small number of small pieces of the thin film counted is indicative of low degree of adhesion of small pieces of the thin film to the roll.

[3. Step (2)]

In the step (2), the small pieces of the thin film are exfoliated from the substrate layer of the cracked multilayer film to obtain a powder containing the small pieces of the thin film.

The method for exfoliating the small pieces of the thin film from the substrate layer is not limited in particular. Examples thereof may include: (1) a method of sliding the cracked multilayer film over a blade to exfoliate the small pieces; (2) a method of blowing a fluid such as water and air to the cracked multilayer film to exfoliate the small pieces; (3) a method of immersing the cracked multilayer film into a solvent (such as water) that has low tendency to dissolve the thin film (for example, a cholesteric resin layer) but high tendency to dissolve the substrate layer or a layer lying between the thin film and the substrate layer (for example, an oriented film formed of a polyvinyl alcohol) to exfoliate the small pieces of the thin film from the substrate layer; (4) a method of bonding the thin film side of the cracked multilayer film to a transfer substrate film using a water-soluble adhesive, and then exfoliating the substrate layer from the multilayer film to exfoliate the small pieces of the thin film from the substrate layer; and combinations of these methods.

By the foregoing method (4), a laminate having a layer configuration of (transfer substrate film) / (water-soluble adhesive layer) / (cracked thin film) is usually obtained. A powder containing the small pieces of the thin film may be obtained by, e.g., immersing the laminate into water of appropriate temperature for removing the water-soluble adhesive layer from the laminate.

When the cracked multilayer film is a long-length film, a powder can be efficiently produced by continuously performing the foregoing exfoliating step.

For example, the step (2) may include a step (2a) of blowing a fluid to the cracked multilayer film.

In the step (2a), the fluid is blown to the crack-formed side (i.e., the thin film side) of the cracked multilayer film. As the blowing apparatus, any publicly known fluid discharge apparatus may be used. The pressure of the fluid discharged from the fluid discharge apparatus may be adjusted as appropriate depending on the density of the fluid, strength of exfoliation between the substrate layer and the thin film, etc. The discharge pressure is not limited in particular, and preferably 5 MPa or more, and more preferably 10 MPa or more, and is preferably 50 MPa or less, and more preferably 35 MPa or less.

The step (2) may include a step (2b) of sifting the small pieces of the thin film after the exfoliation of the small pieces.

For example, after the step (2a) of blowing a fluid to the cracked multilayer film, the small pieces exfoliated from the substrate layer may be made to pass through a filter having a predetermined opening size.

The step (2) may include a step (2c) of collecting the small pieces of the thin film after the exfoliation of the small film.

For example, after the step (2a) of blowing a fluid to the cracked multilayer film, the small pieces exfoliated from the substrate layer may be guided into a collection channel along with the fluid, and the small pieces may be collected by a collector to obtain a powder that is an accumulation of the small pieces. Examples of the collector may include a cyclone separator and various filters.

[4. Properties of powder]

The powder obtained by the producing method according to the present embodiment contains a large proportion of thin film pieces having a consistent shape along the cracks. The proportion may be evaluated by, e.g., the following method.

Prepare a 10%-by-weight aqueous dispersion of the powder. Drop the aqueous dispersion onto a preparation slide and evaporate the moisture to make the powder (thin film pieces) adhere to the preparation slide. Observe the part of the preparation slide to which the thin film pieces adhere under a microscope. In a 1-mm-square region, count the number (A) of thin film pieces with a consistent shape and the number (B) of thin film pieces with an inconsistent shape. Determine a percentage X of the number (B) of pieces to the number (A) of pieces by the following equation:

$$X = B/A \times 100 \ (\%).$$

Small amount of the percentage X is indicative of high proportion of the thin film pieces having a consistent shape along the cracks.

The percentage X of the powder is preferably 5% or less, more preferably 4% or less, and still more preferably 3% or less, and is preferably 0%, but may be 0% or more or 1% or more.

[5. Applications of powder]

The powder produced by the producing method according to the present embodiment contains a large proportion of thin film pieces having a consistent shape along the cracks. Therefore, using ink containing the powder, a print product of favorable texture can be obtained. In addition, the authenticity of the print product using the ink containing the powder can be easily determined. The powder can thus be suitably used as ink material.

[Examples]

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature (20°C $\pm$ 15°C) and normal pressure (1 atm), unless otherwise specified.

[Evaluation]

(Adhesion of exfoliated pieces)

The surface of the midsection of a roll used to form cracks on a film for the second time in each example is observed under a microscope. In a 1-mm-square region, the number of exfoliated pieces present on the recesses of the recess-protrusion shape is counted. Small number of exfoliated pieces is indicative of small amount of adhesion of the exfoliated pieces (small pieces) to the roll, whereby continuous crack formation can be efficiently performed. Adhesion of exfoliated pieces is evaluated according to the following criteria.

"Good": Number of exfoliated pieces < 5
"Poor": Number of exfoliated pieces ≥ 5

[Example 1]

(1-1. Preparation of photocurable liquid crystal composition)

A photocurable liquid crystal composition is prepared by mixing 18.1 parts of a photopolymerizable liquid crystal compound "Paliocolor LC242" manufactured by BASF, 1.3 parts of "LC756" manufactured by BASF as a chiral agent, 0.6 part of "Irgacure OXEO2" manufactured by Ciba Japan Co., Ltd. as a photopolymerization initiator, 0.02 part of "Ftergent 209F" manufactured by Neos Co., Ltd. as a surfactant, and 80 parts of cyclopentanone.

(1-2. Production of long-length multilayer film)

As the substrate film, a long-length cycloolefin polymer (COP) film ("ZF16-100" manufactured by ZEON Corporation; thickness: 100 $\mu$m) is prepared. The substrate film is attached to an unwinding section of a film conveyance device, and the following operations are performed while the substrate film is conveyed in the lengthwise direction. First, the substrate film is subjected to a rubbing treatment in a lengthwise direction parallel to the conveying direction. Subsequently, the liquid crystal composition prepared in (1-1) is applied onto the rubbed surface of the substrate film using a die coater. Thus, a film of the liquid crystal composition in an uncured state is formed on one side of the substrate film.

The obtained film of the liquid crystal composition is subjected to an orientation treatment at 100°C for 5 minutes, and after that, the film of the liquid crystal composition is irradiated with ultraviolet rays of 800 mJ/cm$^2$ in a nitrogen-atmosphere to completely cure the film of the liquid crystal composition. As a result, a multilayer film including a resin thin film having a thickness of 3.5 $\mu$m on one side of the long-length substrate film is obtained. The multilayer film has a layer configuration of (substrate film as a substrate layer) / (resin thin film). The resin thin film has a function as a cholesteric resin layer.

(1-3. Production of member (roll) having recess-protrusion shape)

A metal roll that is made of stainless steel and the surface of which has been subjected to an electroless nickel plating (NiP plated) is prepared. The surface of the plated roll is cut with a diamond bite (obtained by modifying a tip having an apex angle of 50° to be in a flat shape to thereby form a flat portion having a cross-sectional length of 46 $\mu$m) to obtain a roll A and a roll B having a plurality of protrusions.

On the roll A, a plurality of protrusions are formed in a manner where the protrusions extend diagonally, upward to the right, in a direction that forms an angle of 45° with respect to a straight line, parallel to a roll axis, on the peripheral surface of the roll. The protrusions are formed in a manner where the pitch of the protrusions is 50 $\mu$m, and also in a manner where the angle of the apex of the protrusions in a cross-section perpendicular to the direction in which the protrusions extend is 50°.

On the roll B, a plurality of protrusions are formed in a manner where the protrusions extend diagonally, upward to the left, in a direction that forms an angle of 45° with respect to a straight line, parallel to a roll axis, on the peripheral surface of the roll. The protrusions are formed in a manner where the pitch of the protrusions is 50 $\mu$m, and also in a manner where the angle of the apex of the protrusions in a cross-section perpendicular to the direction in which the protrusions extend is 50°.

Measuring the depth of the cut portion of each roll (height of the protrusions) by a laser microscope, the depth is 4.3 $\mu$m.

(1-4. Step (1): Crack formation step)

From the resin thin film side, the roll A produced in (1-3) is pressed (press pressure: 10 MPa) against the multilayer film, which may be produced in (1-2), and then the roll B is pressed (press pressure: 10 MPa) against the film to form cracks on the multilayer film. At this time, the side of the multilayer film opposite to the resin thin film (the substrate film side; the backup roll side) is supported by a backup roll. As the backup roll, a roll with a D70 surface hardness is used. The hardness herein is a value measured by a durometer (type-D) according to JIS K-6253. The same applies hereinafter. As a result, the resin thin film of the multilayer film is divided into small square pieces (having a major

diameter of 70 $\mu$m) each having an edge of 50 $\mu$m when viewed in the thickness direction of the resin thin film.

After the crack formation step, the roll B is evaluated for the state of adhesion of exfoliated pieces by the method described above. As a result, it is expected that the adhesion of the exfoliated pieces would be at a low level.

(1-5. Step (2): Powder production step)

Then, water is blown to the cracked multilayer film from the resin thin film side at a discharge pressure of 60 MPa to exfoliate small pieces of the resin thin film from the substrate film.

Then, the exfoliated small pieces of the resin thin film are made to pass through a sieve having a nominal opening of 53 $\mu$m, and the sifted small pieces are collected by a filter collector (an all-polypropylene filter manufactured by 3M Corporation) to obtain a powder containing the small pieces of the resin thin film.

[Example 2]

(2-1 to 2-2)

As the substrate film, a long-length triacetyl cellulose film ("KC6UY" manufactured by Konica Minolta Co., Ltd.; thickness: 60 $\mu$m) is used. Except for the aforementioned matter, a multilayer film is produced by the same manner as that in (1-1) to (1-2) of Example 1.

(2-3. Production of member (roll) having recess-protrusion shape)

A metal roll that is the same as that employed in (1-3) of Example 1 is prepared. The surface of the plated roll is cut with a diamond bite (obtained by modifying a tip having an apex angle of 50° to be in a flat shape to thereby form a flat portion having a cross-sectional length of 96 $\mu$m) to obtain a roll C having a plurality of protrusions.

On the roll C, a plurality of protrusions are formed in a manner where the protrusions extend diagonally, upward to the left, in a direction that forms an angle of 45° with respect to a straight line, parallel to a roll axis, on the peripheral surface of the roll, and also in a manner where the pitch of the protrusions is 100 $\mu$m.

Measuring the depth of the cut portion of each roll (height of the protrusions) by a laser microscope, the depth is 4.3 $\mu$m.

(2-4. Step (1): Crack formation step)

Cracks are formed on the multilayer film by the same manner as that in (1-4) of Example 1 except that the roll C is used instead of the roll B. As a result, the resin thin film of the multilayer film is divided into rectangular small pieces (major diameter: 112 $\mu$m) having a size of 50 $\mu$m × 100 $\mu$m when viewed in the thickness direction of the resin thin film.

After the crack formation step, the roll C is evaluated for the state of adhesion of exfoliated pieces by the method described above. As a result, it is expected that the adhesion of the exfoliated pieces would be at a low level.

(2-5. Step (2): Powder production step)

The opening of the sieve through which the small pieces of the exfoliated resin thin film is made to pass is changed from the nominal opening of 53 $\mu$m to the nominal opening of 106 $\mu$m. Except for the aforementioned matter, a powder is obtained by the same manner as that in (1-5) of Example 1.

[Example 3]

(3-1 to 3-2)

As a multilayer film, a polyethylene terephthalate (PET) film on which aluminum has been deposited with a thickness of 12 $\mu$m ("VMPET1519" manufactured by Toray Advanced Film Co., Ltd.) is prepared. The multilayer film has a layer configuration of (aluminum film as thin film) / (PET film as substrate layer).

(3-3. Production of member (roll) having recess-protrusion shape)

A metal roll that is the same as that employed in (1-3) of Example 1 is prepared. A depression is formed on the surface of the plated roll with an ultrashort pulse laser (dimple processing) to obtain a roll D.

On the roll D, continuous hexagonal protrusions are formed. The major diameter of the protrusion is 50 $\mu$m,

one edge thereof is 25 $\mu$m, and the depth of recesses (height of the protrusion) is 14 $\mu$m.

(3-4. Step (1): Crack formation step)

- Cracks are formed on the multilayer film by the same manner as that in (1-4) of Example 1 except that the roll D is used instead of the roll A, and that pressing of the multilayer film with the roll B is not performed. As a result, the aluminum film of the multilayer film is divided into hexagonal small pieces having a major diameter of 50 $\mu$m and an edge of 25 $\mu$m when viewed in the thickness direction of the film.

After the crack formation step, the roll D is evaluated for the state of adhesion of exfoliated pieces by the method described above. As a result, it is expected that the adhesion of the exfoliated pieces would be at a low level.

(3-5. Step (2): Powder production step)

A powder is obtained by the same manner as that in (1-5) in Example 1.

[Comparative Example 1]

(4-1. Production of member (roll) having recess-protrusion shape)

A metal roll that is made of stainless steel and has been subjected to an electroless nickel plating (NiP plated) is prepared. The surface of the plated roll is cut with a diamond bite (obtained by modifying a tip having an apex angle of 50° to be in a flat shape to thereby form a flat portion having a cross-sectional length of 40 $\mu$m) to obtain a roll E and a roll F having a plurality of protrusions.

On the roll E, a plurality of protrusions are formed in a manner where the protrusions extend diagonally, upward to the right, in a direction that forms an angle of 45° with respect to a straight line, parallel to a roll axis, on the peripheral surface of the roll. The protrusions are formed in a manner where the pitch of the protrusions is 50 $\mu$m, and also in a manner where the angle of the apex of the protrusions in a cross-section perpendicular to the direction in which the protrusions extend is 50°.

On the roll F, a plurality of protrusions are formed in a manner where the protrusions extend diagonally, upward to the left, in a direction that forms an angle of 45° with respect to a straight line parallel to a roll axis on the peripheral surface of the roll. The protrusions are formed in a manner where the pitch of the protrusions is 50 $\mu$m, and the angle of the apex of the protrusions in a cross-section perpendicular to the direction in which the protrusions extend is 50°.

Measuring the depth of the cut portion of each roll (height of the protrusions) by a laser microscope, the depth is 10.7 $\mu$m.

A powder is obtained by the same manner as that in Example 1 except that the roll E and the roll F were used instead of the roll A and roll B for forming cracks.

After the crack formation step, the roll F is evaluated for the state of adhesion of exfoliated pieces by the method described above. As a result, it is expected that the adhesion of the exfoliated pieces would be at a high level, which would impede efficient collection of the exfoliated pieces.

In the table below, abbreviations represent the following meanings:

"Cholesteric resin layer": a layer of a cured product of a liquid crystal composition
"Al film": deposited aluminum film

Table 1

|  | Ex. 1 | Ex. 2 | Ex. 3 | Comp. Ex. 1 |
|---|---|---|---|---|
| Thin film | Choleste ric resin layer | Cholesteric resin layer | Al film | Choleste ric resin layer |
| Film thickness T($\mu$m) | 3.5 | 3.5 | 12 | 3.5 |
| Protrusion height ($\mu$m) | 4.3 | 4.3 | 14 | 10.7 |

(continued)

|  | Ex. 1 | Ex. 2 | Ex. 3 | Comp. Ex. 1 |
|---|---|---|---|---|
| Protrusion height / film thickness T | 1.22 | 1.22 | 1.16 | 3.05 |
| Small piece shape | Square | Rectangular | Hexagon | Square |
| Exfoliated piece adhesion | Good | Good | Good | Poor |

By the producing method of Comparative Example 1 in which protrusions higher than 1.5T $\mu$m are formed on the surface of the roll for forming cracks, a high level of the adhesion of the exfoliated pieces to the roll occurs, and the exfoliated pieces cannot be obtained efficiently. On the other hand, by the producing method of the examples using the roll having protrusions with a height of 1.1T $\mu$m or more and 1.5T $\mu$m or less, there is no exfoliated piece adhering to the roll, and it is possible to efficiently produce exfoliated pieces. The thickness of the thin film is herein referred to as T.

[Reference Sign List]

| | |
|---|---|
| 10 | multilayer film |
| 11 | thin film |
| 12 | substrate layer |
| 100 | multilayer film |
| 100C | crack |
| 100C1 | notch |
| 100C2 | notch |
| 100Cd | depth |
| 100Ct | tip |
| 101 | small piece |
| 110 | thin film |
| 110T | thickness |
| 110U | surface |
| 120 | substrate layer |
| 120U | surface |
| 200 | multilayer film |
| 200C | crack |
| 200Ct | tip |
| 201 | small piece |
| 210 | thin film |
| 220 | substrate layer |
| 220U | surface |
| 1110 | roll |
| 1110T | protrusion |
| 1110T1 | protrusion |
| 1110T2 | protrusion |
| 1110t | apex |
| 1110D | recess |
| 1111 | end |
| 1112 | end |
| 1115 | roll |
| 1115T | protrusion |
| 1115T1 | protrusion |
| 1115T2 | protrusion |
| 1115t | apex |
| 1115D | recess |
| 1116 | end |
| 1117 | end |

1120     support member
1125     support member

**Claims**

1.  A roll for forming cracks on a thin film, which is disposed on an outermost side, of a multilayer film that includes a substrate layer and the thin film by pressing the roll against a thin film-side surface of the multilayer film,
    the roll comprising protrusions on a peripheral surface thereof, the protrusions having a height of 1.1T $\mu$m or more and 1.5T $\mu$m or less where T represents a thickness ($\mu$m) of the thin film.

2.  A method for producing a powder, comprising:

    a step (1) of forming cracks on a multilayer film that includes a substrate layer and a thin film which is disposed on an outermost side of the multilayer film, the cracks dividing the thin film into small pieces of the same shape when viewed in a thickness direction thereof and reaching a position deeper than a thin film-side surface of the substrate layer; and
    a step (2) of exfoliating the small pieces of the thin film from the substrate layer of the multilayer film on which the cracks is formed to obtain a powder containing the small pieces of the thin film, wherein
    the step (1) includes a step (1a) of pressing a peripheral surface of the roll against the thin film-side surface of the multilayer film, and
    the roll has protrusions on the peripheral surface thereof, the protrusions having a height of 1.1T $\mu$m or more and 1.5T $\mu$m or less where T represents a thickness ($\mu$m) of the thin film.

3.  The method for producing a powder according to claim 2, wherein a peripheral surface between the protrusions of the roll is flat.

4.  The method for producing a powder according to claim 2, wherein the thickness T of the thin film is 0.1 $\mu$m or more and 20 $\mu$m or less.

5.  The method for producing a powder according to claim 2, wherein in the step (1a) a pressure for pressing the peripheral surface of the roll is 0.5 MPa or more.

6.  The method for producing a powder according to claim 2, wherein pressing of the step (1a) is performed in a state where the multilayer film is supported by a support member having a surface hardness of D40 or more.

7.  The method for producing a powder according to claim 2, wherein a major diameter of the small pieces is 150 $\mu$m or less.

# FIG.1

# FIG.2

# FIG.3

# FIG.4

# FIG.5

# FIG.6

# FIG.7

1111

X1

1110

1112

X1

# FIG.8

1110

1111

1110T

1110D

$\theta x$

Y1

L1

Y1

1112

# FIG.9

# FIG.10

# FIG.11

# FIG.12

# FIG.13

# EP 4 400 213 A1

## INTERNATIONAL SEARCH REPORT

| | International application No. |
|---|---|
| | **PCT/JP2022/027992** |

**A. CLASSIFICATION OF SUBJECT MATTER**

*B02C 4/08*(2006.01)i; *B02C 4/30*(2006.01)i; *B26F 1/20*(2006.01)i; *B29C 59/04*(2006.01)i
FI:    B02C4/08; B29C59/04 C; B02C4/30; B26F1/20

According to International Patent Classification (IPC) or to both national classification and IPC

**B. FIELDS SEARCHED**

Minimum documentation searched (classification system followed by classification symbols)

B02C1/00-25/00; B26F1/00-3/36; B29C53/00-53/84;57/00-59/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/189246 A1 (ZEON CORP.) 03 October 2019 (2019-10-03)<br>entire text, all drawings | 1-7 |
| A | WO 2021/172567 A1 (ZEON CORP.) 02 September 2021 (2021-09-02)<br>entire text, all drawings | 1-7 |
| P, A | JP 2021-133441 A (ZEON CORP.) 13 September 2021 (2021-09-13)<br>entire text, all drawings | 1-7 |
| A | JP 2015-189207 A (DAINIPPON PRINTING CO., LTD.) 02 November 2015 (2015-11-02)<br>entire text, all drawings | 1-7 |
| A | JP 2015-057301 A (YANAGIDA SEISAKUSHO KK) 26 March 2015 (2015-03-26)<br>entire text, all drawings | 1-7 |
| A | JP 2016-187955 A (FUJIFILM CORP.  ) 04 November 2016 (2016-11-04)<br>entire text, all drawings | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/027992**

| Patent document cited in search report | | | Publication date (day/month/year) | Patent family member(s) | | | Publication date (day/month/year) |
|---|---|---|---|---|---|---|---|
| WO | 2019/189246 | A1 | 03 October 2019 | US | 2021/0115336 | A1 | |
| | | | | entire text, all drawings | | | |
| | | | | EP | 3778171 | A1 | |
| | | | | TW | 201942258 | A | |
| WO | 2021/172567 | A1 | 02 September 2021 | (Family: none) | | | |
| JP | 2021-133441 | A | 13 September 2021 | (Family: none) | | | |
| JP | 2015-189207 | A | 02 November 2015 | (Family: none) | | | |
| JP | 2015-057301 | A | 26 March 2015 | (Family: none) | | | |
| JP | 2016-187955 | A | 04 November 2016 | CN | 106003689 | A | |
| | | | | entire text, all drawings | | | |
| | | | | KR | 10-2016-0117191 | A | |

Form PCT/ISA/210 (patent family annex) (January 2015)

**EP 4 400 213 A1**

**Patent documents cited in the description**

- JP 7080248 B
- WO 2019189246 A
- US 20210115336
- JP 2002321302 A